# EUROPEAN PATENT APPLICATION

(11) **EP 3 528 554 A1**
(43) Date of publication of application: **21.08.2019**
(21) Application number: 17866861.2
(22) Date of filing: 24.11.2017
(51) Int. Cl.: H04W 52/02

(54) **METHOD FOR TRANSMITTING INFORMATION, TERMINAL DEVICE AND NETWORK DEVICE**

(30) Priority: 04.11.2016 CN 201610977293
(71) Applicant: Huawei Technologies Co., Ltd., Longgang District Shenzhen, Guangdong 518129 (CN)
(72) Inventor: TANG, Xun, Shenzhen Guangdong 518129 (CN); QUAN, Wei, Shenzhen Guangdong 518129 (CN); ZHANG, Jian, Shenzhen Guangdong 518129 (CN)
(74) Representative: Thun, Clemens
(86) International application number: PCT/CN2017/112935
(87) International publication number: WO 2018/082716

(57) **Abstract**

This application provides an information transmission method, a network device, and a terminal device. The method includes: determining, by a network device, configuration information, where the configuration information is used by a terminal device to determine a time length of a hybrid automatic repeat request round trip time timer HARQ RTT timer; and sending, by the network device, the configuration information to the terminal device. According to the information transmission method provided in this application, the network device dynamically configures the time length of the HARQ RTT timer for the terminal device by using the configuration information, so that power consumption can be reduced while a data transmission delay requirement is ensured.

## Description

### TECHNICAL FIELD

This application relates to the communications field, and more specifically, to an information transmission method, a network device, and a terminal device.

### BACKGROUND

A packet-based data stream is usually bursty. Data is transmitted within a period of time, but then no data is transmitted within a relatively long period of time. When no data is transmitted, power consumption may be reduced by stopping receiving a PDCCH (in this case, blind detection for the PDCCH is stopped), to prolong usage time of a battery. This is a reason for discontinuous reception (Discontinuous Reception, "DRX" for short).

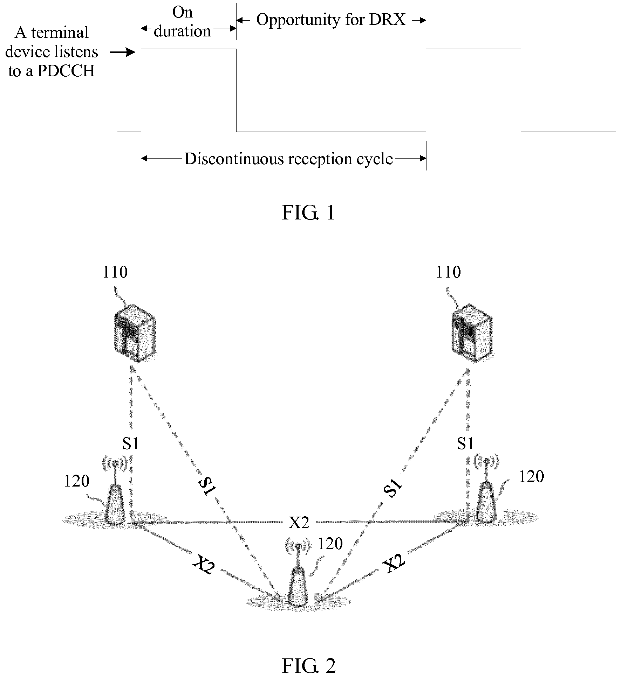

A basic mechanism of DRX is configuring a DRX cycle (cycle) for a terminal device in a Radio Resource Control connected (RRCCONNECTED) mode. As shown in FIG. 1, the DRX cycle includes an active period (On Duration) and a dormancy period (Opportunity for DRX). Within an "On Duration" period, the terminal device listens to and receives a physical downlink control channel (Physical Downlink Control Channel, "PDCCH" for short). Within an "Opportunity for DRX" period, the terminal device does not receive any PDCCH to reduce power consumption. In time domain, time is divided into consecutive DRX cycles.

To allow the terminal device to enter the dormancy period within a HARQ round trip time (Round Trip Time, "RTT" for short) to reduce power consumption, a hybrid automatic repeat request round trip time timer (HARQ RTT Timer) is defined in Long Term Evolution (Long Term Evolution, "LTE" for short). In FDD, for a HARQ process, a HARQ RTT timer has a fixed time length of eight subframes. In TDD, for a HARQ process, a HARQ RTT timer has a time length of k+4 subframes. A value of k is a time interval between downlink transmission and corresponding HARQ feedback (for the value of k, refer to Table 10.1.3.1-1 in TS 36.213).

However, as a system further evolves, a base station indicates, during downlink scheduling, a time point for the terminal device to feed back an acknowledgment/negative acknowledgment (ACK/NACK). In other words, a time length from receiving downlink data by the terminal device to feeding back the ACK/NACK by the terminal device is no longer fixed at four subframes, but flexibly configured. In this case, a HARQ RTT timer with a fixed time length cannot achieve an expected effect.

### SUMMARY

This application provides an information transmission method, a network device, and a terminal device, so that the terminal device can reduce power consumption while ensuring a data transmission delay requirement.

According to a first aspect, an information transmission method is provided. The method includes: determining, by a network device, configuration information, where the configuration information is used by a terminal device to determine a time length of a hybrid automatic repeat request round trip time timer HARQ RTT timer; and sending, by the network device, the configuration information to the terminal device.

In this embodiment of the present invention, the network device dynamically configures the time length of the HARQ RTT timer for the terminal device by using the configuration information, so that power consumption can be reduced while a data transmission delay requirement is ensured.

In a possible design, for a HARQ process, the HARQ RTT timer is a downlink HARQ RTT timer, the configuration information includes a first time interval, the first time interval indicates an interval between a first moment and a second moment, the first moment is a moment at which the network device starts to transmit first downlink data, and the second moment is a moment at which the network device first starts to retransmit the first downlink data.

In this embodiment of the present invention, the network device dynamically configures the time length of the downlink HARQ RTT timer for the terminal device by using the configuration information, so that power consumption can be reduced while a data transmission delay requirement is ensured.

In a possible design, the HARQ RTT timer is the downlink HARQ RTT timer, the configuration information includes a second time interval, the second time interval indicates an interval between the first moment and a third moment, the first moment is the moment at which the network device starts to transmit the first downlink data, and the third moment is a moment at which the terminal device starts to send acknowledgment ACK or negative acknowledgment NACK feedback information for the first downlink data.

In a possible design, the configuration information further includes a third time interval, the third time interval indicates an interval between the third moment and the second moment, and the second moment is the moment at which the network device first starts to retransmit the first downlink data.

One or more of the first time interval, the second time interval, and the third time interval may be included in one configuration message.

In a possible design, for a HARQ process, the HARQ RTT timer is an uplink HARQ RTT timer, the configuration information includes a fourth time interval, the fourth time interval indicates an interval between a fourth moment and a fifth moment, the fourth moment is a moment at which the terminal device starts to receive uplink transmission scheduling information for first uplink data, and the fifth moment is a moment at which the terminal device first starts to receive uplink retransmission scheduling information for the first uplink data.

In this embodiment of the present invention, the network device dynamically configures the time length of the uplink HARQ RTT timer for the terminal device by using the configuration information, so that power consumption can be reduced while a data transmission delay requirement is ensured.

In a possible design, the HARQ RTT timer is the uplink HARQ RTT timer, the configuration information includes a fifth time interval, the fifth time interval indicates an interval between the fourth moment and a sixth moment, the fourth moment is the moment at which the terminal device starts to receive the uplink transmission scheduling information for the first uplink data, and the sixth moment is a moment at which the terminal device starts to transmit the first uplink data.

In a possible design, the HARQ RTT timer is the uplink HARQ RTT timer, the configuration information includes a sixth time interval, the sixth time interval indicates an interval between the sixth moment and the fifth moment, the sixth moment is the moment at which the terminal device starts to transmit the first uplink data, and the fifth moment is the moment at which the terminal device first starts to receive the uplink retransmission scheduling information for the first uplink data.

One or more of the fourth time interval, the fifth time interval, and the sixth time interval may be included in one configuration message.

In a possible design, the sending, by the network device, the configuration information to the terminal device includes: sending, by the network device, Radio Resource Control RRC information to the terminal device, where the RRC information includes the configuration information; or sending, by the network device, Media Access Control control element MAC CE information to the terminal device, where the MAC CE information includes the configuration information; or sending, by the network device, downlink control information DCI to the terminal device, where the DCI includes the configuration information.

In a possible design, the time length of the HARQ RTT timer includes at least one time unit.

In some possible designs, the configuration information includes length information of the time unit of the HARQ RTT timer.

In some possible designs, the length information of the time unit is specified in a protocol.

In this embodiment of the present invention, the time length of the HARQ RTT timer of the terminal device is in a form of the time unit due to the configuration information sent by the network device, so that power consumption can be reduced while a data transmission delay requirement is ensured.

In a possible design, a length of the time unit of the HARQ RTT timer is a length of one subframe, a length of one symbol, or a length of a plurality of consecutive symbols.

In a possible design, before the determining, by a network device, configuration information, the method further includes: obtaining, by the network device, capability information of the terminal device, where the capability information is used to indicate information about a data processing delay of the terminal device.

In a possible design, the capability information includes at least one of the following information items: a minimum processing delay between receiving downlink data by the terminal device and sending feedback information for the downlink data by the terminal device; a minimum processing delay between receiving uplink initial-transmission scheduling information by the terminal device and sending uplink initially-transmitted data by the terminal device; or a minimum processing delay between receiving uplink retransmission scheduling information by the terminal device and sending uplink retransmitted data by the terminal device.

In some possible designs, the configuration information is instruction information, the instruction information is used to instruct the terminal device to determine the time length of the HARQ RTT timer from preconfigured time length information based on the capability information of the terminal device, and the time length information is specified in a protocol.

In some possible designs, the length of the time unit of the HARQ RTT timer is a length of two consecutive symbols.

In some possible designs, after the HARQ RTT timer expires, a drx-retransmission timer drx-RetransmissionTimer is started.

According to a second aspect, a network device is provided. The network device includes a module configured to perform the foregoing network device-based information transmission method. Based on a same invention idea, because a problem resolution principle of the network device corresponds to the solutions in the method designs in the foregoing aspect, for an implementation of the network device, refer to the implementation of the method. Details are not repeated.

According to a third aspect, a network device is provided. The network device includes a transceiver, a memory, and a processor. The transceiver, the memory, and the processor are connected by using a system bus. The memory is configured to store an instruction. The processor is configured to execute the instruction stored in the memory. When the program is executed, the processor is configured to perform the network device-based information transmission method.

According to a fourth aspect, an information transmission method is provided. The method includes: receiving, by a terminal device, configuration information sent by a network device; and determining, by the terminal device, a time length of a hybrid automatic repeat request round trip time timer HARQ RTT timer based on the configuration information.

In this embodiment of the present invention, the terminal device dynamically determines the time length of the HARQ RTT timer by using the configuration information sent by the network device, so that power consumption can be reduced while a data transmission delay requirement is ensured.

In a possible design, the HARQ RTT timer is a downlink HARQ RTT timer, the configuration information includes a first time interval, the first time interval indicates an interval between a first moment and a second moment, the first moment is a moment at which the network device starts to transmit first downlink data, and the second moment is a moment at which the network device first starts to retransmit the downlink data. The determining, by the terminal device, a time length of a hybrid automatic repeat request round trip time timer HARQ RTT timer based on the configuration information includes: determining, by the terminal device, the first time interval as the time length of the downlink HARQ RTT timer.

In this embodiment of the present invention, the terminal device dynamically determines the time length of the downlink HARQ RTT timer by using the configuration information sent by the network device, so that power consumption can be reduced while a data transmission delay requirement is ensured.

In a possible design, the HARQ RTT timer is the downlink HARQ RTT timer, the configuration information includes a second time interval, the second time interval indicates an interval between the first moment and a third moment, the first moment is the moment at which the network device starts to transmit the first downlink data, and the third moment is a moment at which the terminal device starts to send acknowledgment ACK or negative acknowledgment NACK feedback information for the first downlink data. The determining, by the terminal device, a time length of a hybrid automatic repeat request round trip time timer HARQ RTT timer based on the configuration information includes: determining, by the terminal device, the time length of the downlink HARQ RTT timer based on the first time interval and/or the second time interval.

In a possible design, the configuration information further includes a third time interval, the third time interval indicates an interval between the third moment and the second moment, and the second moment is the moment at which the network device first starts to retransmit the first downlink data. The determining, by the terminal device, a time length of a hybrid automatic repeat request round trip time timer HARQ RTT timer based on the configuration information includes: determining, by the terminal device, the time length of the HARQ RTT timer based on the first time interval, the second time interval, and the third time interval.

The configuration information may include one or more of the first time interval, the second time interval, and the third time interval.

In a possible design, the HARQ RTT timer is an uplink HARQ RTT timer, the configuration information includes a fourth time interval, the fourth time interval indicates an interval between a fourth moment and a fifth moment, the fourth moment is a moment at which the terminal device starts to transmit first uplink data, and the fifth moment is a moment at which the terminal device first starts to receive uplink retransmission scheduling information for the first uplink data. The determining, by the terminal device, a time length of a hybrid automatic repeat request round trip time timer HARQ RTT timer based on the configuration information includes: determining, by the terminal device, the fourth time interval as the time length of the uplink HARQ RTT timer.

In this embodiment of the present invention, the terminal device dynamically determines the time length of the uplink HARQ RTT timer by using the configuration information sent by the network device, so that power consumption can be reduced while a data transmission delay requirement is ensured.

In a possible design, the HARQ RTT timer is the uplink HARQ RTT timer, the configuration information includes a fifth time interval, the fifth time interval indicates an interval between the fourth moment and a sixth moment, the fifth moment is a moment at which the terminal device starts to receive uplink transmission scheduling information for the first uplink data, and the sixth moment is a moment at which the terminal device starts to transmit the first uplink data. The determining, by the terminal device, a time length of a hybrid automatic repeat request round trip time timer HARQ RTT timer based on the configuration information includes: determining, by the terminal device, the time length of the uplink HARQ RTT timer based on the fourth time interval and/or the fifth time interval.

In a possible design, the HARQ RTT timer is the uplink HARQ RTT timer, the configuration information includes a sixth time interval, the sixth time interval indicates an interval between the sixth moment and the fifth moment, the sixth moment is the moment at which the terminal device starts to transmit the first uplink data, and the fifth moment is the moment at which the terminal device first starts to receive the uplink retransmission scheduling information for the first uplink data. The determining, by the terminal device, a time length of a hybrid automatic repeat request round trip time timer HARQ RTT timer based on the configuration information includes: determining, by the terminal device, the time length of the uplink HARQ RTT timer based on the sixth time interval.

The configuration information may include one or more of the fourth time interval, the fifth time interval, and the sixth time interval.

In a possible design, the determining, by the terminal device, a time length of a HARQ RTT timer based on the fourth time interval, the fifth time interval, and the sixth time interval includes: adding, by the terminal device, the fifth time interval and the sixth time interval, to obtain a seventh time interval; and determining, by the terminal device in the fourth time interval and the seventh time interval, a time interval that meets a first criterion as the time length of the HARQ RTT timer.

In a possible design, the determining, by the terminal device in the fourth time interval and the seventh time interval, a time interval that meets a first criterion as the time length of the downlink HARQ RTT timer includes: determining, by the terminal device in the fourth time interval and the seventh time interval, a shorter time interval as the time length of the downlink HARQ RTT timer, or a longer time interval as the time length of the downlink HARQ RTT timer.

In some possible designs, the terminal device determines the fourth time interval as the time length of the HARQ RTT timer, or determines the seventh time interval as the time length of the HARQ RTT timer.

In a possible design, the receiving, by a terminal device, configuration information sent by a network device includes: receiving, by the terminal device, Radio Resource Control RRC information sent by the network device, where the RRC information includes the configuration information; or receiving, by the terminal device, Media Access Control control element MAC CE information sent by the network device, where the MAC CE information includes the configuration information; or receiving, by the terminal device, downlink control information DCI information sent by the network device, where the DCI information includes the configuration information.

In a possible design, the time length of the HARQ RTT timer includes at least one time unit.

In some possible designs, the configuration information includes length information of the time unit of the HARQ RTT timer.

In some possible designs, the length information of the time unit is specified in a protocol.

In this embodiment of the present invention, the time length of the HARQ RTT timer of the terminal device is in a form of the time unit due to the configuration information sent by the network device, so that power consumption can be reduced while a data transmission delay requirement is ensured.

In a possible design, a length of the time unit of the HARQ RTT timer is a length of one subframe, a length of one symbol, or a length of a plurality of consecutive symbols.

In a possible design, before the receiving, by a terminal device, configuration information sent by a network device, the method further includes: sending, by the terminal device, capability information of the terminal device to the terminal device.

In a possible design, the capability information includes at least one of the following information items: a minimum processing delay between receiving downlink data by the terminal device and sending feedback information for the downlink data by the terminal device; a minimum processing delay between receiving uplink initial-transmission scheduling information by the terminal device and sending uplink initially-transmitted data by the terminal device; or a minimum processing delay between receiving uplink retransmission scheduling information by the terminal device and sending uplink retransmitted data by the terminal device.

In some possible designs, the configuration information is instruction information, the terminal device determines the time length of the HARQ RTT timer from preconfigured time length information based on the instruction information and the capability information of the terminal device, and the preconfigured time length information is specified in a protocol.

In some possible designs, the length of the time unit of the HARQ RTT timer is a length of two consecutive symbols.

In some possible designs, after the HARQ RTT timer expires, the terminal device starts a drx-retransmission timer drx-RetransmissionTimer.

According to a fifth aspect, a terminal device is provided. The terminal device includes a module configured to perform the foregoing terminal device-based information transmission method in the fourth aspect. Based on a same invention idea, because a problem resolution principle of the terminal device corresponds to the solutions in the method designs in the fourth aspect, for an implementation of the terminal device, refer to the implementation of the method. Details are not repeated.

According to a sixth aspect, a terminal device is provided. The terminal device includes a transceiver, a memory, and a processor. The transceiver, the memory, and the processor are connected by using a system bus. The memory is configured to store an instruction. The processor is configured to execute the instruction stored in the memory. When the program is executed, the processor is configured to perform the terminal device-based information transmission method in the fourth aspect.

### BRIEF DESCRIPTION OF DRAWINGS

FIG. 1 is a schematic diagram of discontinuous reception in the prior art;
FIG. 2 is a schematic diagram of a scenario example to which an embodiment of the present invention may be applied;
FIG. 3 is a schematic diagram of another scenario example to which an embodiment of the present invention may be applied;
FIG. 4 is a schematic flowchart of an information transmission method according to an embodiment of the present invention;
FIG. 5 is a schematic structural diagram of a downlink HARQ RTT timer in an FDD system;
FIG. 6 is a schematic structural diagram of a downlink HARQ RTT timer according to an embodiment of the present invention;
FIG. 7 is a schematic structural diagram of an uplink HARQ RTT timer according to an embodiment of the present invention;
FIG. 8 is a schematic structural diagram of a processing delay of a terminal device according to an embodiment of the present invention;
FIG. 9 is a schematic block diagram of a network device according to an embodiment of the present invention;
FIG. 10 is a schematic block diagram of a network device according to another embodiment of the present invention;
FIG. 11 is a schematic block diagram of a terminal device according to an embodiment of the present invention; and
FIG. 12 is a schematic block diagram of a terminal device according to another embodiment of the present invention.

### DESCRIPTION OF EMBODIMENTS

The following describes technical solutions in embodiments of the present invention with reference to accompanying drawings.

It should be understood that the embodiments of the present invention are described by using a cellular communications system, especially an LTE cellular communications system, a 5G system, or an NR communications system, as an example, but this application is not limited thereto. In other words, the technical solutions in the embodiments of the present invention may be applied to various communications systems, for example, a Global System for Mobile Communications (Global System for Mobile Communications, "GSM" for short), a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a 5G communications system, a Long Term Evolution (Long Term Evolution, "LTE" for short) system, an LTE frequency division duplex (Frequency Division Duplex, "FDD" for short) system, LTE time division duplex (Time Division Duplex, "TDD" for short), and a Universal Mobile Telecommunications System (Universal Mobile Telecommunications system, "UMTS" for short).

FIG. 2 is a schematic diagram of an LTE communications system 200 to which an embodiment of the present invention is applied.

The LTE communications system includes three parts: an evolved packet core (Evolved Packet Core, "EPC" for short), an evolved NodeB (eNodeB), and a terminal device. The EPC is responsible for a core network part, a control and processing part of the EPC is referred to as a mobility management entity (MME), and a data bearer part of the EPC is referred to as a serving gateway (Serving Gateway, "S-GW" for short). As shown in FIG. 1, the LTE communications system 100 includes at least one MME/S-GW gateway 110 and at least one evolved NodeB 120, and each evolved NodeB may be connected to an MME/S-GW gateway through an S1 interface, and connected to a nearby evolved NodeB through an X2 interface. The evolved NodeB is configured to forward signaling and a data packet in an inter-cell handover process.

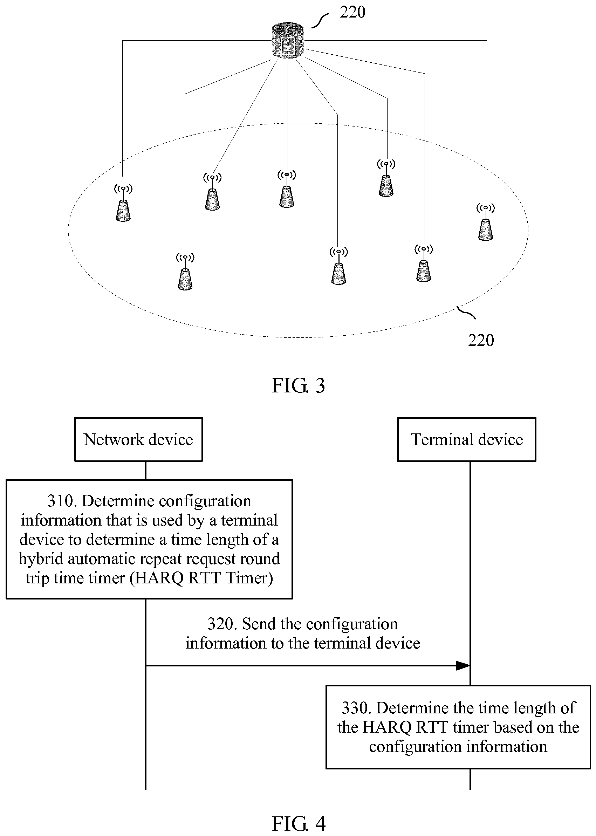

FIG. 3 is a schematic diagram of an NR system 300 according to an embodiment of the present invention.

A 5G or NR system includes an NR-NB 210 and a radio signal transmission/reception point (TRP) 220. As shown in the figure, there may be one or more TRPs 220 of one NR-NB. Each TRP can form a plurality of beams to communicate with a terminal device. Each TRP sends data to the terminal device in a downlink direction, and receives data of the terminal device in an uplink direction.

It should be understood that FIG. 2 and FIG. 3 are merely used as examples to describe the embodiments with reference to a network device and a terminal device. The network device may be a device for communicating with the terminal device. The network device may include a base station or a network side device that has a base station function. For example, as shown in FIG. 2, the network device may be an evolved NodeB (Evolved NodeB, eNB or eNodeB) in an LTE system, or may be a base transceiver station (Base Transceiver Station, BTS) in a GSM system or CDMA, or may be a NodeB (NodeB, NB) in a WCDMA system, or may be a relay station, an access point, an in-vehicle device, a wearable device, a network side device in a future 5G network, or the like.

The terminal device may be user equipment (User Equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The access terminal may be a cellular phone, a cordless telephone set, a Session Initiation Protocol (Session Initiation Protocol, SIP) phone, a wireless local loop (Wireless Local Loop, WLL) station, a personal digital assistant (Personal Digital Assistant, PDA for short), a handheld device having a wireless communication function, a computing device or another processing device connected to a wireless modem, an in-vehicle device, a wearable device, a terminal device in a future 5G network, a terminal device in a future evolved PLMN network, or the like.

FIG. 4 is a schematic flowchart of an information transmission method 300 according to an embodiment of the present invention.

310. Determine configuration information that is used by a terminal device to determine a time length of a hybrid automatic repeat request round trip time timer (HARQ RTT Timer).

Specifically, a network device determines the configuration information, and the configuration information is used by the terminal device to determine the time length of the HARQ RTT timer.

For example, the configuration information includes a part or all of information about the time length of the HARQ RTT timer, and the terminal device determines the time length of the HARQ RTT timer based on the configuration information.

For another example, the configuration information is merely instruction information, a plurality of time lengths are configured for the HARQ RTT timer in a protocol, and the terminal device selects one time length from the plurality of time lengths based on the instruction information and capability information. In this embodiment of the present invention, the time length of the HARQ RTT timer may include at least one time unit. Optionally, the configuration information may further include length information of the time unit of the HARQ RTT timer. In other words, by using the configuration information, the network device can not only configure the time length of the HARQ RTT timer of the terminal device, but also configure information about the time unit of the HARQ RTT timer. Optionally, the configuration information includes only value information, and the time unit of the HARQ RTT timer is selected by the terminal device based on a scenario. For example, in an enabled short TTI scenario, the time unit is a short TTI, to be specific, at a length of one or more consecutive symbols. For example, a length of the short TTI is two symbols. In a non-enabled short TTI scenario, the time unit is a subframe.

Optionally, a length of the time unit of the HARQ RTT timer is a length of one subframe, or a length of one or more consecutive symbols. To be specific, the terminal device may determine, by using the configuration information sent by the network device, that the length of the time unit of the time length of the HARQ RTT timer is a length of one subframe, or a length of one or more consecutive symbols.

For example, the length of the time unit of the HARQ RTT timer is a length of two consecutive symbols, a length of five consecutive symbols, or a length of seven consecutive symbols.

For another example, the length of the time unit of the HARQ RTT timer may be a length of a transmission time interval (Transmission Time Interval, "TTI" for short).

Optionally, a basic TTI in LTE is 1 ms, and a minimum transmission time interval is also 1 ms. Therefore, the time unit of the HARQ RTT timer is also 1 ms. When the terminal device enters a short TTI mode, a length of a TTI may be a length of one or more symbols. In this case, the time unit of the HARQ RTT timer is also at a length of a short TTI, to be specific, a length of one or more symbols.

It should be understood that, in this embodiment of the present invention, the length of the time unit of the HARQ RTT timer may be a length of one subframe, or may be a length of one PDCCH subframe, or may be a length of a plurality of subframes or a plurality of PDCCH subframes. The length of the time unit of the HARQ RTT timer may be a length of a plurality of consecutive symbols, or may be a length of inconsecutive symbols. This is not limited in this application.

Therefore, according to the information transmission method provided in this application, the time length of the HARQ RTT timer of the terminal device is in a form of the time unit due to the configuration information, so that power consumption can be reduced while a data transmission delay requirement is ensured.

It should be further understood that the information about the time unit of the HARQ RTT timer in this embodiment of the present invention may be associated with the configuration information, or may be specified in a protocol. This is not limited in this application.

For example, in the enabled short TTI scenario, the time unit is a short TTI, to be specific, at a length of one or more consecutive symbols. Optionally, a length of the short TTI is two symbols.

For another example, in the non-enabled short TTI scenario, the time unit is a subframe.

It should be understood that the enabled short TTI scenario in this embodiment of the present invention may be a scenario in which data is transmitted within a consecutive period of time by using the short TTI, and may be configured by the network device, or may be specified in a protocol.

It should be further understood that the configuration information may be used to configure the length of the time unit of the HARQ RTT timer, and may be used to configure a length of a time unit of another timer. This is not limited in this application.

For example, a drx-RetransmissionTimer is started after the HARQ RTT timer expires. If the drx-RetransmissionTimer is still set by using a subframe as a unit, an excessively long activate time may be caused and power is wasted. Therefore, the drx-RetransmissionTimer may also be configured by using a short TTI as a time unit.

An OnDurationTimer, an inactivity timer, or the like is similar thereto.

It should be further understood that the configuration information may be used to configure the length of the time unit of the HARQ RTT timer, and a length of a time unit of another timer may be still in a form of a subframe. This is not limited in this application. Optionally, a time unit of the foregoing DRX-related timer is selected by the terminal device based on a scenario. For example, in the enabled short TTI scenario, the time unit is a short TTI, to be specific, at a length of one or more consecutive symbols. In the non-enabled short TTI scenario, the time unit is a subframe.

For example, the terminal device may start or restart the inactivity timer when receiving a scheduling command (for example, an uplink initial-transmission scheduling command or a downlink initial-transmission scheduling command) in a subframe in the middle of a radio frame. Optionally, the inactivity timer has a length unit of two symbols, a total length of the inactivity timer is 16 symbols, and the inactivity timer may not expire at a moment on a last symbol of a subframe. In this case, for an expiration moment, it may be specified that the inactivity timer expires at an end moment of a subframe in which the inactivity timer is located, or expires at a start moment of a subframe in which the inactivity timer is located. In other words, the expiration moment is aligned with a previous subframe or a following subframe in terms of time. Optionally, when the inactivity timer is started or restarted, if an expiration subframe location after the inactivity timer is started/restarted and an expiration subframe location when the inactivity timer is not started or restarted fall into a same subframe, the inactivity timer may not be started or restarted.

It should be understood that according to the method provided in this application, the terminal device may be instructed by using the configuration information to start the HARQ RTT timer or not to start the HARQ RTT timer. This is not limited in this application.

For example, when the length, associated with the configuration information, of the time unit is less than and/or equal to a particular value, for example, 1 ms, the HARQ RTT timer is prohibited. In other words, the drx-RetransmissionTimer is directly started in a subframe in which a downlink scheduling command is received or uplink data is sent; or both the HARQ RTT timer and the drx-RetransmissionTimer are prohibited, that the terminal device receives a retransmission scheduling command is ensured by using another timer such as the inactivity timer. This is not limited in this application.

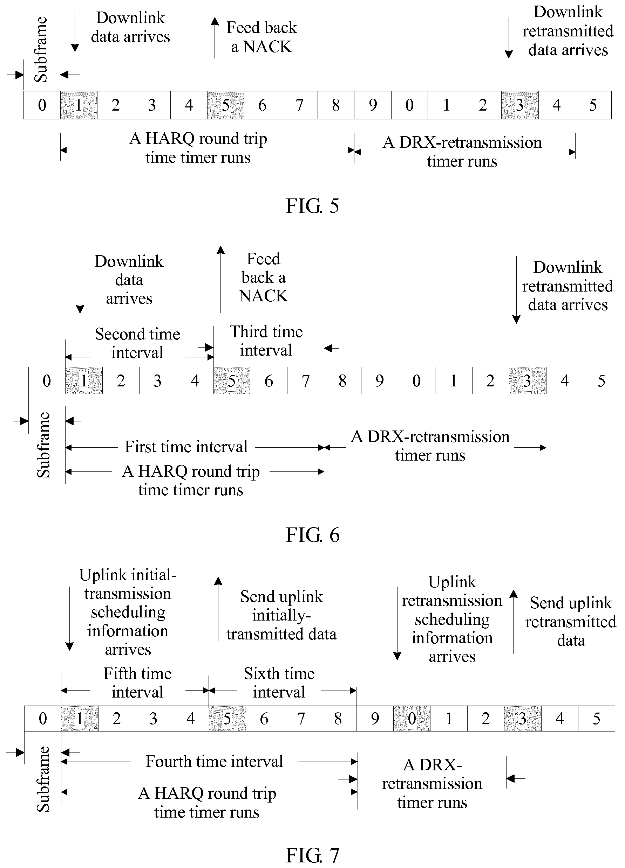

Specific implementations in which the terminal device determines the time length of the HARQ RTT timer by using the configuration information are separately described below with reference to FIG. 5 to FIG. 7 by using a downlink HARQ RTT timer and an uplink HARQ RTT timer as examples.

In an embodiment of this application, the HARQ RTT timer is a downlink HARQ RTT timer.

HARQ retransmission of downlink data is usually performed asynchronously. In other words, no fixed timing relationship exists between receiving, by the terminal device, data initially transmitted by the network device and receiving, by the terminal device, data retransmitted by the network device. A HARQ RTT timer defined in LTE allows the terminal device to start to listen to a PDCCH of downlink retransmitted data only after the HARQ RTT timer started from previous downlink transmission expires. Downlink transmission may be based on dynamic scheduling, to be specific, the terminal device obtains scheduling information of current data transmission by listening to a PDCCH. Alternatively, downlink transmission may be based on semi-persistent scheduling, to be specific, the network device periodically sends data to the terminal device on a fixed time-frequency resource.

For example, in an FDD system, the HARQ RTT timer has a fixed time length of eight sub frames.

FIG. 5 is a schematic structural diagram of a downlink HARQ RTT timer in an FDD system.

As shown in FIG. 5, when downlink data arrives in a sub frame 1, the HARQ RTT timer is started from the subframe 1, to be specific, the terminal device enters an inactivate time and does not perform blind detection for a PDCCH; the terminal device feeds back a NACK in a subframe 5, and after the HARQ RTT timer expires in a subframe 8, a drx-Retransmission Timer is started from a subframe 9, to be specific, the terminal device enters an activate time and starts to perform blind detection for a PDCCH; and the terminal device receives downlink retransmission scheduling information at a location of a subframe 3 of a next radio frame.

In other words, a default downlink HARQ time sequence relationship in the FDD system is as follows: The network device initially transmits downlink data in a subframe n, the terminal device performs feedback in a subframe n+4, and the network device may first retransmit the downlink data in a subframe n+8. Therefore, the downlink HARQ RTT timer has a fixed time length of eight subframes in FDD. The eight subframes include four subframes from receiving the downlink data by the terminal device to feeding back an ACK/NACK by the terminal device, and four subframes from feeding back the ACK/NACK by the terminal device to downlink retransmission scheduling.

However, as a system further evolves, a downlink HARQ RTT timer with a fixed time length is no longer applicable. For example, in a flexible HARQ scenario in which a base station indicates, during downlink scheduling, a time point for a terminal device to feed back an ACK/NACK, in other words, a time length from receiving downlink data by the terminal device to feeding back the ACK/NACK by the terminal device is no longer fixed four subframes, but flexibly configured. In this case, the length of the HARQ RTT timer needs to be synchronously adjusted to achieve an expected power consumption reduction effect.

According to the information transmission method provided in this embodiment of the present invention, the downlink HARQ RTT timer is flexibly configured for the terminal device by using the configuration information, so that power consumption can be further reduced.

FIG. 6 is a schematic structural diagram of a downlink HARQ RTT timer in information transmission according to an embodiment of the present invention.

As shown in FIG. 6, in a downlink flexible HARQ of this application, a time interval (T2) between downlink initial transmission and feedback of the terminal device is a variable instead of fixed four subframes. Similarly, a minimum time interval (T3) between the feedback of the terminal device and downlink retransmission is not necessarily four subframes. A time length (T1) of the HARQ RTT timer is T2+T3. After the downlink HARQ RTT timer expires, a DRX-retransmission timer is started, and detection for a PDCCH is started, to obtain possible downlink retransmitted data.

Optionally, the terminal device determines the time length of the HARQ RTT timer based on the configuration information, and the terminal device runs the HARQ RTT timer based on a subframe location at which downlink initially-transmitted data is received and the time length of the HARQ RTT timer.

It should be noted that the time interval in this embodiment of the present invention is an interval between two moments, and is a relative value of the two moments. For example, a time interval between a subframe n and a subframe n+k is k subframes.

Specifically, as shown in FIG. 6, the network device initially transmits downlink data in a subframe 1, and the terminal device sends feedback information to the network device in a subframe 5. Therefore, the time interval between downlink initial transmission and feedback of the terminal device is an interval between the subframe 1 and the subframe 5, namely, four subframes.

It should be understood that the time interval in this application may be in a form of one subframe, or may be in a form of a plurality of subframes, or may be in a form of a length of one or more symbols, or may be in a form of a length of a TTI. It should be further understood that the time interval in this application may alternatively be in another form. For example, the time interval between the subframe n and the subframe n+k is k subframes, and the k subframes may include the subframe n, but do not include the subframe n+k. This is not limited in this application. For another example, the time interval between the subframe n and the subframe n+k is k subframes, and the k subframes may include the subframe n+k, but do not include the subframe n.

According to the information transmission method provided in this application, the network device dynamically configures the time length of the downlink HARQ RTT timer for the terminal device by using the configuration information, so that power consumption can be reduced while a data transmission delay requirement is ensured.

Optionally, the configuration information includes a first time interval, the first time interval indicates an interval between a first moment and a second moment, the first moment is a moment at which the network device initially transmits first downlink data, and the second moment is an earliest moment at which the network device retransmits the first downlink data.

Specifically, the network device configures the HARQ RTT timer for the terminal device by using the configuration information. Therefore, the terminal device may directly determine the first time interval as the time length of the downlink HARQ RTT timer based on the configuration information.

For example, as shown in FIG. 6, the first time interval is an interval between the subframe 1 and a subframe 8, in other words, the first time interval is seven subframes, and the terminal device determines, based on the first time interval and the first moment, that a time of the HARQ round trip time timer is from the subframe 1 to a subframe 7.

Optionally, the configuration information includes a second time interval, the second time interval indicates an interval between the first moment and a third moment, the first moment is the moment at which the network device initially transmits the first downlink data, and the third moment is a moment at which the terminal device sends negative acknowledgment NACK feedback information for the first downlink data.

Specifically, the terminal device determines the time length of the downlink HARQ RTT timer based on the second time interval. For example, the terminal device may determine the time length of the downlink HARQ RTT timer based on the second time interval configured by the network device and a third time interval dynamically/semi-statically configured by the network device, a fixed third time interval specified in a protocol, or a third time interval determined according to a predetermined rule, for example, the third time interval is equal to the second time interval.

Optionally, the configuration information further includes the third time interval, the third time interval indicates an interval between the third moment and the second moment, the third moment is the moment at which the terminal device sends the negative acknowledgment NACK feedback information for the first downlink data, and the second moment is the earliest moment at which the network device retransmits the first downlink data.

Specifically, the terminal device determines the time length of the downlink HARQ RTT timer based on the third time interval. For example, the terminal device may determine the time length of the downlink HARQ RTT timer based on the second time interval configured by the network device and the third time interval configured by the network device.

For example, as shown in FIG. 6, the second time interval is an interval between the sub frame 1 and the sub frame 5, in other words, the first time interval is four subframes, the third time interval is an interval between the subframe 5 and the subframe 8, in other words, the first time interval is three subframes, and the terminal device determines, based on the second time interval, the third time interval, and the first moment, that a time of the HARQ round trip time timer is from the subframe 1 to the subframe 7.

Therefore, according to the information transmission method provided in this application, the network device dynamically configures the time length of the downlink HARQ RTT timer for the terminal device by using the configuration information, so that power consumption can be reduced while a data transmission delay requirement is ensured.

The configuration information may include one or more of the first time interval, the second time interval, and the third time interval.

It should be understood that, in this embodiment of the present invention, the first time interval, the second time interval, or the third time interval may be dynamically configured by the network device by using, for example, downlink control channel (DCI) information; or may be semi-statically configured by using, for example, Radio Resource Control (RRC) information; or may be configured by using a Media Access Control control element MAC CE; or may be fixedly configured in a protocol; or may indicate a calculation rule. This is not limited in this application.

In another embodiment of this application, the HARQ RTT timer is an uplink HARQ RTT timer.

In an existing LTE system, a HARQ protocol may be classified into two types in time domain: a synchronous (synchronous) HARQ protocol and an asynchronous (asynchronous) HARQ protocol. The synchronous uplink HARQ means that a terminal device can retransmit data only at a fixed moment after previous transmission. To be specific, the terminal device sends retransmitted data to a base station at a fixed moment according to a specification in a protocol, and the base station does not need to send a scheduling command during uplink retransmission. For example, in an FDD system, the terminal device sends initially-transmitted data to the base station in a subframe n, the base station feeds back a NACK to the terminal device in a subframe n+4, and the terminal device sends retransmitted data to the base station in a subframe n+8 without scheduling by the base station.

However, the asynchronous uplink HARQ means that retransmission may occur at any moment. To be specific, after a terminal device feeds back a NACK to a network device, the terminal device does not send retransmitted data in a fixed subframe, but needs to first receive retransmission scheduling information that is sent by the network device by using a PDCCH, and the terminal device sends the retransmitted data to the base station only after obtaining the scheduling information.

According to the information transmission method provided in this embodiment of the present invention, the uplink HARQ RTT timer is flexibly configured for the terminal device by using the configuration information, so that power consumption can be further reduced.

FIG. 7 is a schematic structural diagram of an uplink HARQ RTT timer in information transmission according to an embodiment of the present invention.

As shown in FIG. 7, the terminal device receives uplink initial-transmission scheduling information in a subframe 1. The scheduling information instructs to send uplink initially-transmitted data in a subframe n+4. The uplink HARQ RTT timer is started in the subframe 1. The uplink HARQ RTT timer expires in a subframe 8, and a DRX-retransmission timer is started in a subframe 9, to attempt to obtain possible uplink retransmission scheduling information. As shown in the figure, the terminal device receives uplink retransmission scheduling information in a subframe 0 of a next frame. The scheduling information instructs to send retransmitted data in a subframe n+3. The terminal device sends uplink retransmitted data in a subframe 3 of the next frame.

It should be understood that, in an uplink flexible HARQ of this application, a time interval (T3) between uplink initial-transmission scheduling and uplink initial transmission is a variable, and a time interval (T4) between the uplink initial transmission and feedback of the terminal device may also be a variable. A time length of the HARQ RTT timer is a time length of T3+T4, and is also a variable. It should be noted that for uplink transmission based on semi-persistent scheduling, the terminal device may periodically send data on a preconfigured time-frequency resource without PDCCH scheduling. In this case, the time length of the HARQ RTT timer is a length of T4.

Therefore, according to the information transmission method provided in this application, the network device dynamically configures the time length of the uplink HARQ RTT timer for the terminal device by using the configuration information, so that power consumption can be reduced while a data transmission delay requirement is ensured.

Optionally, the configuration information includes a fourth time interval, the fourth time interval indicates an interval between a fourth moment and a fifth moment, the fourth moment is a moment at which the terminal device starts to receive uplink initial-transmission scheduling information for first uplink data, and the fifth moment is a moment at which the terminal device first starts to receive uplink retransmission scheduling information for the first uplink data.

Specifically, the network device configures the uplink HARQ RTT timer for the terminal device by using the configuration information. For example, as shown in FIG. 7, the terminal device may directly determine the fourth time interval as the time length of the uplink HARQ RTT timer based on the configuration information.

Optionally, the configuration information includes the fifth time interval, the fifth time interval indicates an interval between the fourth moment and a sixth moment, the fourth moment is the moment at which the terminal device starts to receive the uplink initial-transmission scheduling information for the first uplink data, and the sixth moment is a moment at which the terminal device starts to transmit the first uplink data.

Specifically, the terminal device determines the time length of the uplink HARQ RTT timer based on the fifth time interval. For example, the terminal device may determine the time length of the uplink HARQ RTT timer based on the fifth time interval configured by the network device and a sixth time interval dynamically/semi-statically configured by the network device, a fixed sixth time interval specified in a protocol, or a sixth time interval determined according to a predetermined rule, for example, the sixth time interval is equal to the fifth time interval.

Optionally, the configuration information further includes the sixth time interval, the sixth time interval indicates an interval between the sixth moment and the fifth moment, the sixth moment is the moment at which the terminal device initially transmits the first uplink data, and the fifth moment is the earliest moment at which the terminal device receives the uplink retransmission scheduling information for the first uplink data.

Specifically, the terminal device determines the time length of the uplink HARQ RTT timer based on the sixth time interval. For example, the terminal device may determine the time length of the uplink HARQ RTT timer based on the fifth time interval configured by the network device and the sixth time interval configured by the network device.

Therefore, according to the information transmission method provided in this application, the network device dynamically configures the time length of the uplink HARQ RTT timer for the terminal device by using the configuration information, so that power consumption can be reduced while a data transmission delay requirement is ensured.

It should be understood that, in this embodiment of the present invention, the fourth time interval, the fifth time interval, or the sixth time interval may be dynamically configured by the network device by using, for example, uplink control channel (DCI) information; or may be semi-statically configured by using, for example, Radio Resource Control (RRC) information; or may be configured by using a Media Access Control control element MAC CE; or may be fixedly configured in a protocol; or may indicate a calculation rule. This is not limited in this application.

Therefore, according to the information transmission method provided in this application, the network device dynamically configures the time length of the HARQ RTT timer for the terminal device by using the configuration information, so that power consumption can be reduced while a data transmission delay requirement is ensured.

It should be noted that, in this embodiment of the present invention, the second moment in the downlink HARQ is the earliest moment at which the network device retransmits the first downlink data, and the fifth moment in the uplink HARQ is the earliest moment at which the terminal device receives the uplink retransmission scheduling information for the first uplink data. In a process of determining the configuration information, the network device needs to determine the second moment in the downlink HARQ and/or the fifth moment in the uplink HARQ. The second moment and/or the fifth moment may be a possible earliest moment preconfigured by the network device for the terminal device, to ensure a relatively small data transmission delay.

Optionally, the network device determines the second moment in the downlink HARQ or the fifth moment in the uplink HARQ based on capability information of the terminal device.

Specifically, in a flexible HARQ, the network device may specify a time for the terminal device to perform a related action. For example, uplink data is sent in a time unit that is several time units after a time unit in which uplink scheduling information is received, or an ACK/NACK is fed back in a time unit that is several time units after a time unit in which downlink data is received. The time indication is limited by resource usage and a processing capability of the terminal device, for example, a shortest processing time of the terminal device.

For example, in a downlink data transmission scenario, the base station indicates downlink scheduling information to the terminal device, and sends data to the terminal device within a same time unit. Processing of the terminal device includes blind detection for a PDCCH and PDSCH demodulation, determining whether current demodulation succeeds, and generating a corresponding ACK/NACK signal to notify the base station. A time interval that is indicated by the base station to the terminal device and that is used to feed back an ACK/NACK after downlink data is received needs to be at least greater than a processing delay of the terminal device.

For another example, in an uplink data transmission scenario, after uplink scheduling information is received, the terminal device needs to perform data packet assembly and generation based on a scheduling requirement. A time for such processing is also a lower limit of scheduling by the base station.

Optionally, before the network device determines the configuration information, the method 300 further includes obtaining capability information of the terminal device.

Optionally, the capability information is used to indicate information about a data processing delay of the terminal device.

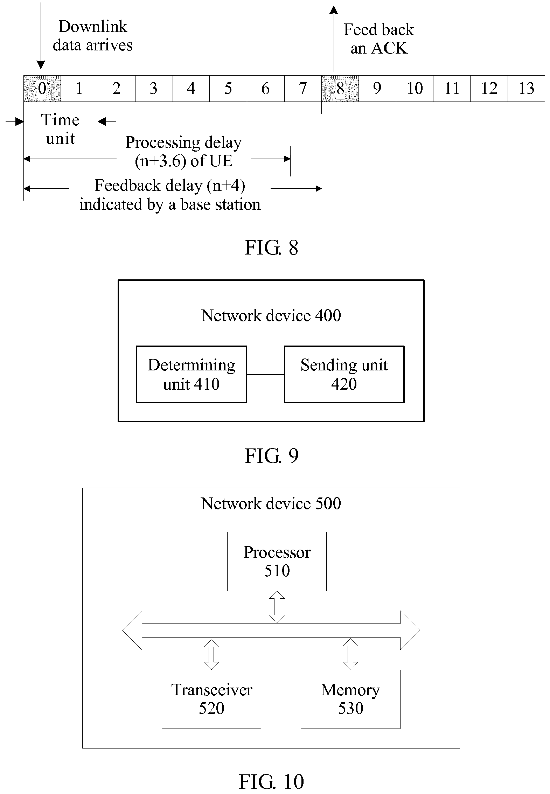

FIG. 8 is a schematic structural diagram of a processing delay of a terminal device according to an embodiment of the present invention.

As shown in FIG. 8, when a time unit includes two symbols, the terminal device reports a downlink data processing delay of 3.6 TTIs to the base station. Therefore, the network device indicates, to the terminal device, that an ACK/NACK may be fed back within an (n+4)^{th} time unit.

Optionally, the capability information includes at least one of the following information items: a minimum processing delay between receiving downlink data by the terminal device and sending feedback information for the downlink data by the terminal device; a minimum processing delay between receiving uplink initial-transmission scheduling information by the terminal device and sending uplink data by the terminal device; or a minimum processing delay between receiving uplink retransmission scheduling information by the terminal device and sending uplink data by the terminal device.

Optionally, when reporting the processing delay, the terminal device may directly report a specific delay value, or may convert a specific delay value into a corresponding index based on a preset table and report the index. This is not limited in this application.

For example, a possible table is as follows:

**Table 1 Preset table for a processing delay of a terminal device**

| Processing delay value range (including a left boundary value, and not including a right boundary value) | Index value |
|---|---|
| 0-1 TTI | 0 |
| 1-2 TTIs | 1 |
| 2-3 TTIs | 2 |
| 3-4 TTIs | 3 |

The TTI in the table represents a time unit. It should be understood that Table 1 is merely an example, and values in the table are not specifically limited in this embodiment of the present invention. For example, a value in the processing delay value range in Table 1 may be determined based on an actual situation. For another example, the processing delay value range in Table 1 may not include the left boundary value, but include the right boundary value. This is not limited in this application.

Therefore, according to the information transmission method provided in this embodiment of the present invention, the network device can faster or more accurately determine the configuration information by using the capability information, reported by the terminal device, of the terminal device.

The foregoing describes, in detail with reference to FIG. 4 to FIG. 8, the implementations of determining the configuration information by the network device, and the following describes an implementation of sending the configuration information to the terminal device by the network device and a specific implementation of determining, by the terminal device, the time length of the HARQ RTT timer based on the configuration information.

As shown in FIG. 4, the information transmission method provided in this application further includes the following step:
320. Send the configuration information to the terminal device.

Specifically, the network device sends the configuration information to the terminal device.

Optionally, the network device sends Radio Resource Control (RRC) information to the terminal device, and the RRC information includes the configuration information. Alternatively, the network device sends downlink control information (DCI) information to the terminal device, and the MAC CE information includes the configuration information. Alternatively, the network device sends downlink control information (RRC) information to the terminal device, or the DCI information includes the configuration information.

It should be understood that, in this embodiment of the present invention, the network device may send the configuration information to the terminal device by using the RRC information, the DCI information, or the MAC CE information, or may send the configuration information to the terminal device in another manner, for example, specify the configuration information in a protocol. This is not limited in the present invention.

As shown in FIG. 4, the information transmission method provided in this application further includes the following step:
330. Determine the time length of the HARQ RTT timer based on the configuration information.

Specifically, the terminal device determines the time length of the HARQ RTT timer based on the configuration information sent by the network device.

In an embodiment, the HARQ RTT timer is a downlink HARQ RTT timer, and the configuration information is associated with the downlink HARQ RTT timer.

Optionally, as shown in FIG. 6, the configuration information may include the second time interval and the third time interval, and the terminal device can calculate a time length, referred to as an estimated length below, of the downlink HARQ RTT timer based on the second time interval and the third time interval.

It should be understood that when the terminal device calculates the estimated length based on the configuration information, the configuration information may include the second time interval and the third time interval, or may include only the second time interval or the third time interval.

For example, the configuration information includes only the second time interval, the third time interval may be statically/semi-statically preconfigured, or may be specified in a protocol, or may be determined according to a predetermined rule, for example, the third time interval is equal to the second time interval.

Optionally, as shown in FIG. 6, the configuration information may include only the first time interval, and the terminal device directly determines the first time interval as a time length, referred to as a preconfigured length below, of the downlink HARQ RTT timer.

For another example, as shown in FIG. 6, the configuration information may include the first time interval, the second time interval, and the third time interval. The terminal device determines, in the estimated length and the preconfigured length, a time interval that meets a first criterion as the time length of the downlink HARQ RTT timer.

Optionally, the first criterion may be that the terminal device selects, in the estimated length and the preconfigured length, a longer time length as the time length of the downlink HARQ RTT timer, or the terminal device selects, in the estimated length and the preconfigured length, a shorter time length as the time length of the downlink HARQ RTT timer.

It should be understood that the terminal device may use the estimated length or the preconfigured length based on the configuration information, and a specific used length may be determined by the terminal device through calculation, or may be indicated by the network device, or may be specified in a protocol.

It should be further understood that the first criterion in this embodiment of the present invention may be a criterion of selecting based on specific values of the estimated length and the preconfigured length, or may be another criterion. The first criterion may be configured by the network device and notified to the terminal device, or may be specified in a protocol. This is not limited in this application.

It should be further understood that, in addition to determining the time length of the downlink HARQ RTT timer by using the foregoing method, the terminal device may also determine the time length of the uplink HARQ RTT timer based on the foregoing method. To avoid repetition, details are not described herein again in this application.

Therefore, according to the information transmission method provided in this application, the terminal device can more accurately determine the time length of the HARQ RTT timer by using the configuration information sent by the network device.

The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

In an implementation process, steps in the foregoing methods may be completed by using an integrated logical circuit of hardware in a processor or by using instructions in a form of software, or may be directly completed by a hardware processor, or completed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and the processor executes instructions in the memory and completes the steps in the foregoing methods in combination with hardware of the processor. To avoid repetition, details are not described herein again.

FIG. 9 is a schematic block diagram of a network device 400 according to an embodiment of the present invention. As shown in FIG. 9, the network device 400 includes:
a determining unit 410, configured to determine configuration information, where the configuration information is used by a terminal device to determine a time length of a hybrid automatic repeat request round trip time timer HARQ RTT timer; and
a sending unit 420, configured to send the configuration information to the terminal device.

Optionally, the HARQ RTT timer is a downlink HARQ RTT timer, the configuration information includes a first time interval, the first time interval indicates an interval between a first moment and a second moment, the first moment is a moment at which the network device starts to transmit first downlink data, and the second moment is a moment at which the network device first starts to retransmit the first downlink data.

Optionally, the HARQ RTT timer is the downlink HARQ RTT timer, the configuration information includes a second time interval, the second time interval indicates an interval between the first moment and a third moment, the first moment is the moment at which the network device initially transmits the first downlink data, and the third moment is a moment at which the terminal device starts to send acknowledgment ACK or negative acknowledgment NACK feedback information for the first downlink data.

Optionally, the configuration information further includes a third time interval, the third time interval indicates an interval between the third moment and the second moment, and the second moment is the moment at which the network device first starts to retransmit the first downlink data.

Optionally, the HARQ RTT timer is an uplink HARQ RTT timer, the configuration information includes a fourth time interval, the fourth time interval indicates an interval between a fourth moment and a fifth moment, the fourth moment is a moment at which the terminal device starts to receive uplink initial-transmission scheduling information for first uplink data, and the fifth moment is a moment at which the terminal device first starts to receive uplink retransmission scheduling information for the first uplink data.

Optionally, the HARQ RTT timer is the uplink HARQ RTT timer, the configuration information includes a fifth time interval, the fifth time interval indicates an interval between the fourth moment and a sixth moment, the fourth moment is the moment at which the terminal device starts to receive the uplink initial-transmission scheduling information for the first uplink data, and the sixth moment is a moment at which the terminal device initially transmits the first uplink data.

Optionally, the configuration information further includes a sixth time interval, the sixth time interval indicates an interval between the sixth moment and the fifth moment, and the fifth moment is the moment at which the terminal device first starts to receive the uplink retransmission scheduling information for the first uplink data.

Optionally, the sending unit 410 is specifically configured to: send Radio Resource Control RRC information to the terminal device, where the RRC information includes the configuration information; or send Media Access Control control element MAC CE information to the terminal device, where the MAC CE information includes the configuration information; or send downlink control information DCI information to the terminal device, where the DCI information includes the configuration information.

Optionally, the time length of the HARQ RTT timer includes at least one time unit, and the configuration information includes length information of the time unit of the HARQ RTT timer.

Optionally, a length of the time unit of the HARQ RTT timer is a length of one sub frame, or a length of one or more consecutive symbols.

Optionally, an obtaining unit is configured to obtain capability information of the terminal device before the determining unit determines the configuration information.

Optionally, the capability information is used to indicate information about a data processing delay of the terminal device.

Optionally, the capability information includes at least one of the following information items:
a minimum processing delay between receiving downlink data by the terminal device and sending feedback information for the downlink data by the terminal device; a minimum processing delay between receiving uplink initial-transmission scheduling information by the terminal device and sending uplink data by the terminal device; or a minimum processing delay between receiving uplink retransmission scheduling information by the terminal device and sending uplink data by the terminal device.

It should be understood that the network device 500 according to this embodiment of the present invention may correspond to the network device in the method embodiment of this application, and operations and/or functions of the modules in the network device 500 and other modules are respectively used to implement corresponding procedures of the method 200. For brevity, details are not described herein again.

FIG. 10 is a schematic block diagram of a network device 500 according to another embodiment of the present invention. As shown in FIG. 10, the network device 500 includes:
a processor 510, a transceiver 520, and a memory 530. The processor 510, the transceiver 520, and the memory 530 are connected by using a bus system. The memory 530 is configured to store an instruction. The processor 510 is configured to execute the instruction stored in the memory 530, to control the transceiver 520 to receive or send a signal.

The processor 510 is configured to determine configuration information. The configuration information is used by a terminal device to determine a time length of a hybrid automatic repeat request round trip time timer HARQ RTT timer. The transceiver 520 is configured to send the configuration information to the terminal device.

Optionally, the transceiver 520 is specifically configured to send Radio Resource Control RRC information or downlink control information DCI information to the terminal device. The RRC information or the DCI information includes the configuration information.

Optionally, the transceiver 520 is further configured to obtain capability information of the terminal device before the determining unit determines the configuration information.

It should be understood that the network device 500 according to this embodiment of the present invention may correspond to the network device in the method embodiment of this application, and may also correspond to operations and/or functions of the modules in the network device 400. For brevity, details are not described herein again.

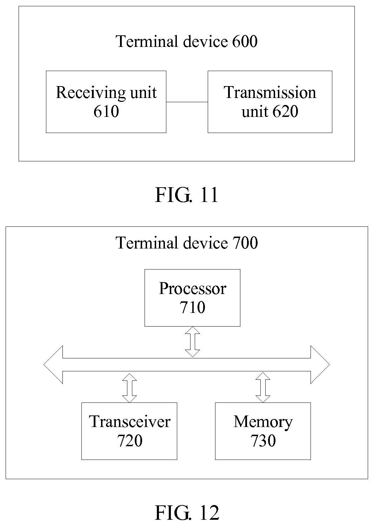

FIG. 11 is a schematic block diagram of a terminal device 600 according to an embodiment of the present invention. As shown in FIG. 11, the terminal device 600 includes:
a receiving unit 610, configured to receive configuration information sent by a network device; and
a determining unit 620, configured to determine a time length of a hybrid automatic repeat request round trip time timer HARQ RTT timer based on the configuration information.

Optionally, the HARQ RTT timer is a downlink HARQ RTT timer, the configuration information includes a first time interval, the first time interval indicates an interval between a first moment and a second moment, the first moment is a moment at which the network device starts to initially transmit first downlink data, and the second moment is a moment at which the network device first starts to retransmit the downlink data. The determining unit 620 is specifically configured to determine the first time interval as the time length of the downlink HARQ RTT timer.

Optionally, the HARQ RTT timer is the downlink HARQ RTT timer, the configuration information includes a second time interval, the second time interval indicates an interval between the first moment and a third moment, the first moment is the moment at which the network device starts to initially transmit the first downlink data, and the third moment is a moment at which the terminal device starts to send acknowledgment ACK or negative acknowledgment NACK feedback information for the first downlink data. The determining unit 620 is specifically configured to determine the time length of the downlink HARQ RTT timer based on the first time interval and/or the second time interval.

Optionally, the configuration information further includes a third time interval, the third time interval indicates an interval between the third moment and the second moment, and the second moment is the moment at which the network device first starts to retransmit the first downlink data. The determining unit 620 is specifically configured to determine the time length of the HARQ RTT timer based on the first time interval, the second time interval, and the third time interval.

Optionally, the HARQ RTT timer is an uplink HARQ RTT timer, the configuration information includes a fourth time interval, the fourth time interval indicates an interval between a fourth moment and a fifth moment, the fourth moment is a moment at which the terminal device starts to initially transmit first uplink data, and the fifth moment is a moment at which the terminal device first starts to receive uplink retransmission scheduling information for the first uplink data. The determining unit 620 is specifically configured to determine the fourth time interval as the time length of the uplink HARQ RTT timer.

Optionally, the HARQ RTT timer is the uplink HARQ RTT timer, the configuration information includes a fifth time interval, the fifth time interval indicates an interval between the fourth moment and a sixth moment, the fourth moment is a moment at which the terminal device starts to receive uplink initial-transmission scheduling information for the first uplink data, and the sixth moment is a moment at which the terminal device starts to initially transmit the first uplink data. The determining unit 620 is specifically configured to determine the time length of the uplink HARQ RTT timer based on the fourth time interval and/or the fifth time interval.

Optionally, the configuration information further includes a sixth time interval, the sixth time interval indicates an interval between the sixth moment and the fifth moment, and the fifth moment is the moment at which the terminal device first starts to receive the uplink retransmission scheduling information for the first uplink data. The determining unit 620 is specifically configured to determine the time length of the uplink HARQ RTT timer based on the sixth time interval.

Optionally, the determining unit 620 is further specifically configured to: add the fifth time interval and the sixth time interval, to obtain a seventh time interval; and determine, in the fourth time interval and the seventh time interval, a time interval that meets a first criterion as the time length of the HARQ RTT timer.

Optionally, the determining unit 620 is further specifically configured to:
determine, in the fourth time interval and the seventh time interval, a shorter time interval as the time length of the downlink HARQ RTT timer, or a longer time interval as the time length of the downlink HARQ RTT timer.

Optionally, the receiving unit 610 is specifically configured to: receive Radio Resource Control RRC information sent by the network device, where the RRC information includes the configuration information; or receive Media Access Control control element MAC CE information sent by the network device, where the MAC CE information includes the configuration information; or receive downlink control information DCI information sent by the network device, where the DCI information includes the configuration information.

Optionally, the time length of the HARQ RTT timer includes at least one time unit, and the configuration information includes length information of the time unit of the HARQ RTT timer.

Optionally, a length of the time unit of the HARQ RTT timer is a length of one sub frame, or a length of one or more consecutive symbols.

Optionally, the terminal device further includes:
a sending unit 630, configured to send capability information of the terminal device to the terminal device before the receiving unit receives the configuration information sent by the network device.

Optionally, the capability information is used to indicate information about a data processing delay of the terminal device.

Optionally, the capability information includes at least one of the following information items:
a minimum processing delay between receiving downlink data by the terminal device and sending feedback information for the downlink data by the terminal device; a minimum processing delay between receiving uplink initial-transmission scheduling information by the terminal device and sending uplink data by the terminal device; or a minimum processing delay between receiving uplink retransmission scheduling information by the terminal device and sending uplink data by the terminal device.

It should be understood that the terminal device 600 according to this embodiment of the present invention may correspond to the terminal device in the method embodiment of this application, and operations and/or functions of the modules in the terminal device 600 and other modules are respectively used to implement corresponding procedures of the method 300. For brevity, details are not described herein again.

FIG. 12 is a schematic block diagram of a terminal device 700 according to another embodiment of the present invention. As shown in FIG. 12, the terminal device 700 includes:
a processor 710, a transceiver 720, and a memory 730. The processor 710, the transceiver 720, and the memory 730 are connected by using a bus system. The memory 730 is configured to store an instruction. The processor 710 is configured to execute the instruction stored in the memory 730, to control the transceiver 720 to receive or send a signal.

The transceiver 720 is configured to receive configuration information sent by a network device. The processor 710 is configured to determine a time length of a hybrid automatic repeat request round trip time timer HARQ RTT timer based on the configuration information.

Optionally, the transceiver 720 is specifically configured to receive Radio Resource Control RRC information or downlink control information DCI information sent by the network device. The RRC information or the DCI information includes the configuration information.

Optionally, the transceiver 720 is further configured to send capability information of the terminal device to the terminal device before the receiving unit receives the configuration information sent by the network device.

It should be understood that the terminal device 700 according to this embodiment of the present invention may correspond to the terminal device in the method embodiment of this application, and may also correspond to operations and/or functions of the modules in the terminal device 600. For brevity, details are not described herein again.

A person of ordinary skill in the art may be aware that, in combination with the embodiments disclosed in this specification, method steps and units can be implemented by electronic hardware, computer software, or a combination thereof. To clearly describe the interchangeability between the hardware and the software, steps and compositions of each embodiment are generally described above based on functions. Whether these functions are performed by hardware or software depends on particular applications and design constraint conditions of the technical solutions. A person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments in this application.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes various media that can store program code, such as a USB flash drive, a removable hard disk, a read-only memory (Read-Only Memory, "ROM" for short), a random access memory (Random Access Memory, "RAM" for short), a magnetic disk, or an optical disc.

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. An information transmission method, wherein the method comprises:
determining, by a network device, configuration information, wherein the configuration information is used by a terminal device to determine a time length of a hybrid automatic repeat request round trip time timer HARQ RTT timer; and
sending, by the network device, the configuration information to the terminal device.

2. The method according to claim 1, wherein the HARQ RTT timer is a downlink HARQ RTT timer, the configuration information comprises a first time interval, the first time interval indicates an interval between a first moment and a second moment, the first moment is a moment at which the network device starts to transmit first downlink data, and the second moment is a moment at which the network device first starts to retransmit the first downlink data.

3. The method according to claim 1 or 2, wherein the HARQ RTT timer is the downlink HARQ RTT timer, the configuration information comprises a second time interval, the second time interval indicates an interval between the first moment and a third moment, the first moment is the moment at which the network device starts to transmit the first downlink data, and the third moment is a moment at which the terminal device starts to send acknowledgment ACK or negative acknowledgment NACK feedback information for the first downlink data.

4. The method according to claim 3, wherein the configuration information further comprises a third time interval, the third time interval indicates an interval between the third moment and the second moment, and the second moment is the moment at which the network device first starts to retransmit the first downlink data.

5. The method according to claim 1, wherein the HARQ RTT timer is an uplink HARQ RTT timer, the configuration information comprises a fourth time interval, the fourth time interval indicates an interval between a fourth moment and a fifth moment, the fourth moment is a moment at which the terminal device starts to receive uplink transmission scheduling information for first uplink data, and the fifth moment is a moment at which the terminal device first starts to receive uplink retransmission scheduling information for the first uplink data.

6. The method according to claim 1 or 5, wherein the HARQ RTT timer is the uplink HARQ RTT timer, the configuration information comprises a fifth time interval, the fifth time interval indicates an interval between the fourth moment and a sixth moment, the fourth moment is the moment at which the terminal device starts to receive the uplink transmission scheduling information for the first uplink data, and the sixth moment is a moment at which the terminal device starts to transmit the first uplink data.

7. The method according to claim 1, 5, or 6, wherein the HARQ RTT timer is the uplink HARQ RTT timer, the configuration information comprises a sixth time interval, the sixth time interval indicates an interval between the sixth moment and the fifth moment, the sixth moment is the moment at which the terminal device starts to transmit the first uplink data, and the fifth moment is the moment at which the terminal device first starts to receive the uplink retransmission scheduling information for the first uplink data.

8. The method according to any one of claims 1 to 7, wherein the sending, by the network device, the configuration information to the terminal device comprises:
sending, by the network device, Radio Resource Control RRC information to the terminal device, wherein the RRC information comprises the configuration information; or
sending, by the network device, Media Access Control control element MAC CE information to the terminal device, wherein the MAC CE information comprises the configuration information; or
sending, by the network device, downlink control information DCI to the terminal device, wherein the DCI comprises the configuration information.

9. The method according to any one of claims 1 to 8, wherein the time length of the HARQ RTT timer comprises at least one time unit.

10. The method according to claim 9, wherein a length of the time unit of the HARQ RTT timer is a length of one subframe, a length of one symbol, or a length of a plurality of consecutive symbols.

11. The method according to any one of claims 1 to 10, wherein before the determining, by a network device, configuration information, the method further comprises:
obtaining, by the network device, capability information of the terminal device.

12. The method according to claim 11, wherein the capability information comprises at least one of the following information items:
a minimum processing delay between receiving downlink data by the terminal device and sending feedback information for the downlink data by the terminal device;
a minimum processing delay between receiving uplink initial-transmission scheduling information by the terminal device and sending uplink initially-transmitted data by the terminal device; or
a minimum processing delay between receiving uplink retransmission scheduling information by the terminal device and sending uplink retransmitted data by the terminal device.

13. An information transmission method, wherein the method comprises:
receiving, by a terminal device, configuration information sent by a network device; and
determining, by the terminal device, a time length of a hybrid automatic repeat request round trip time timer HARQ RTT timer based on the configuration information.

14. The method according to claim 13, wherein the HARQ RTT timer is a downlink HARQ RTT timer, the configuration information comprises a first time interval, the first time interval indicates an interval between a first moment and a second moment, the first moment is a moment at which the network device starts to transmit first downlink data, and the second moment is a moment at which the network device first starts to retransmit the downlink data; and
the determining, by the terminal device, a time length of a hybrid automatic repeat request round trip time timer HARQ RTT timer based on the configuration information comprises:
determining, by the terminal device, the first time interval as the time length of the downlink HARQ RTT timer.

15. The method according to claim 13 or 14, wherein the HARQ RTT timer is the downlink HARQ RTT timer, the configuration information comprises a second time interval, the second time interval indicates an interval between the first moment and a third moment, the first moment is the moment at which the network device starts to transmit the first downlink data, and the third moment is a moment at which the terminal device starts to send acknowledgment ACK or negative acknowledgment NACK feedback information for the first downlink data; and
the determining, by the terminal device, a time length of a hybrid automatic repeat request round trip time timer HARQ RTT timer based on the configuration information comprises:
determining, by the terminal device, the time length of the downlink HARQ RTT timer based on the first time interval and/or the second time interval.

16. The method according to claim 15, wherein the configuration information further comprises a third time interval, the third time interval indicates an interval between the third moment and the second moment, and the second moment is the moment at which the network device first starts to retransmit the first downlink data; and
the determining, by the terminal device, a time length of a hybrid automatic repeat request round trip time timer HARQ RTT timer based on the configuration information comprises:
determining, by the terminal device, the time length of the downlink HARQ RTT timer based on the third time interval.

17. The method according to claim 13, wherein the HARQ RTT timer is an uplink HARQ RTT timer, the configuration information comprises a fourth time interval, the fourth time interval indicates an interval between a fourth moment and a fifth moment, the fourth moment is a moment at which the terminal device starts to receive uplink transmission scheduling information for first uplink data, and the fifth moment is a moment at which the terminal device first starts to receive uplink retransmission scheduling information for the first uplink data; and
the determining, by the terminal device, a time length of a hybrid automatic repeat request round trip time timer HARQ RTT timer based on the configuration information comprises:
determining, by the terminal device, the fourth time interval as the time length of the uplink HARQ RTT timer.

18. The method according to claim 13 or 17, wherein the HARQ RTT timer is the uplink HARQ RTT timer, the configuration information comprises a fifth time interval, the fifth time interval indicates an interval between the fourth moment and a sixth moment, the fourth moment is the moment at which the terminal device starts to receive the uplink transmission scheduling information for the first uplink data, and the sixth moment is a moment at which the terminal device starts to transmit the first uplink data; and
the determining, by the terminal device, a time length of a hybrid automatic repeat request round trip time timer HARQ RTT timer based on the configuration information comprises:
determining, by the terminal device, the time length of the uplink HARQ RTT timer based on the fourth time interval and/or the fifth time interval.

19. The method according to claim 13, 17, or 18, wherein the HARQ RTT timer is the uplink HARQ RTT timer, the configuration information comprises a sixth time interval, the sixth time interval indicates an interval between the sixth moment and the fifth moment, the sixth moment is the moment at which the terminal device starts to transmit the first uplink data, and the fifth moment is the moment at which the terminal device first starts to receive the uplink retransmission scheduling information for the first uplink data; and
the determining, by the terminal device, a time length of a hybrid automatic repeat request round trip time timer HARQ RTT timer based on the configuration information comprises:
determining, by the terminal device, the time length of the uplink HARQ RTT timer based on the sixth time interval.

20. The method according to claim 19, wherein the configuration information comprises the fourth time interval, the fifth time interval, and the sixth time interval; and
the determining, by the terminal device, a time length of a hybrid automatic repeat request round trip time timer HARQ RTT timer based on the configuration information comprises:
adding, by the terminal device, the fifth time interval and the sixth time interval, to obtain a seventh time interval; and
determining, by the terminal device in the fourth time interval and the seventh time interval, a time interval that meets a first criterion as the time length of the HARQ RTT timer.

21. The method according to claim 20, wherein the determining, by the terminal device in the fourth time interval and the seventh time interval, a time interval that meets a first criterion as the time length of the HARQ RTT timer comprises:
determining, by the terminal device in the fourth time interval and the seventh time interval, a shorter time interval as the time length of the HARQ RTT timer, or a longer time interval as the time length of the HARQ RTT timer.

22. The method according to any one of claims 13 to 21, wherein the receiving, by a terminal device, configuration information sent by a network device comprises:
receiving, by the terminal device, Radio Resource Control RRC information sent by the network device, wherein the RRC information comprises the configuration information; or
receiving, by the terminal device, Media Access Control control element MAC CE information sent by the network device, wherein the MAC CE information comprises the configuration information; or
receiving, by the terminal device, downlink control information DCI information sent by the network device, wherein the DCI information comprises the configuration information.

23. The method according to any one of claims 13 to 22, wherein the time length of the HARQ RTT timer comprises at least one time unit.

24. The method according to claim 23, wherein a length of the time unit of the HARQ RTT timer is a length of one subframe, a length of one symbol, or a length of a plurality of consecutive symbols.

25. The method according to any one of claims 13 to 24, wherein before the receiving, by a terminal device, configuration information sent by a network device, the method further comprises:
sending, by the terminal device, capability information of the terminal device to the terminal device.

26. The method according to claim 25, wherein the capability information comprises at least one of the following information items:
a minimum processing delay between receiving downlink data by the terminal device and sending feedback information for the downlink data by the terminal device;
a minimum processing delay between receiving uplink initial-transmission scheduling information by the terminal device and sending uplink initially-transmitted data by the terminal device; or
a minimum processing delay between receiving uplink retransmission scheduling information by the terminal device and sending uplink retransmitted data by the terminal device.

27. A network device, wherein the network device comprises:
a determining unit, configured to determine configuration information, wherein the configuration information is used by a terminal device to determine a time length of a hybrid automatic repeat request round trip time timer HARQ RTT timer; and
a sending unit, configured to send the configuration information to the terminal device.

28. The network device according to claim 27, wherein the HARQ RTT timer is a downlink HARQ RTT timer, the configuration information comprises a first time interval, the first time interval indicates an interval between a first moment and a second moment, the first moment is a moment at which the network device starts to transmit first downlink data, and the second moment is a moment at which the network device first starts to retransmit the first downlink data.

29. The network device according to claim 27 or 28, wherein the HARQ RTT timer is the downlink HARQ RTT timer, the configuration information comprises a second time interval, the second time interval indicates an interval between the first moment and a third moment, the first moment is the moment at which the network device starts to transmit the first downlink data, and the third moment is a moment at which the terminal device starts to send acknowledgment ACK or negative acknowledgment NACK feedback information for the first downlink data.

30. The network device according to claim 29, wherein the configuration information further comprises a third time interval, the third time interval indicates an interval between the third moment and the second moment, and the second moment is the moment at which the network device first starts to retransmit the first downlink data.

31. The network device according to claim 27, wherein the HARQ RTT timer is an uplink HARQ RTT timer, the configuration information comprises a fourth time interval, the fourth time interval indicates an interval between a fourth moment and a fifth moment, the fourth moment is a moment at which the terminal device starts to receive uplink transmission scheduling information for first uplink data, and the fifth moment is a moment at which the terminal device first starts to receive uplink retransmission scheduling information for the first uplink data.

32. The network device according to claim 27 or 31, wherein the HARQ RTT timer is the uplink HARQ RTT timer, the configuration information comprises a fifth time interval, the second time interval indicates an interval between the fourth moment and a sixth moment, the fourth moment is the moment at which the terminal device starts to receive the uplink transmission scheduling information for the first uplink data, and the sixth moment is a moment at which the terminal device starts to transmit the first uplink data.

33. The network device according to claim 27, 31, or 32, wherein the HARQ RTT timer is the uplink HARQ RTT timer, the configuration information comprises a sixth time interval, the sixth time interval indicates an interval between the sixth moment and the fifth moment, the sixth moment is the moment at which the terminal device starts to transmit the first uplink data, and the fifth moment is the moment at which the terminal device first starts to receive the uplink retransmission scheduling information for the first uplink data.

34. The network device according to any one of claims 27 to 33, wherein the sending unit is specifically configured to:
send Radio Resource Control RRC information to the terminal device, wherein the RRC information comprises the configuration information; or
send Media Access Control control element MAC CE information to the terminal device, wherein the MAC CE information comprises the configuration information; or
send downlink control information DCI information to the terminal device, wherein the DCI information comprises the configuration information.

35. The network device according to any one of claims 27 to 34, wherein the time length of the HARQ RTT timer comprises at least one time unit.

36. The network device according to any one of claims 27 to 35, wherein the network device further comprises:
an obtaining unit, configured to obtain capability information of the terminal device before the determining unit determines the configuration information.

37. A terminal device, wherein the terminal device comprises:
a receiving unit, configured to receive configuration information sent by a network device; and
a determining unit, configured to determine a time length of a hybrid automatic repeat request round trip time timer HARQ RTT timer based on the configuration information.

38. The terminal device according to claim 37, wherein the HARQ RTT timer is a downlink HARQ RTT timer, the configuration information comprises a first time interval, the first time interval indicates an interval between a first moment and a second moment, the first moment is a moment at which the network device starts to transmit first downlink data, and the second moment is a moment at which the network device first starts to retransmit the downlink data; and
the determining unit is specifically configured to:
determine the first time interval as the time length of the downlink HARQ RTT timer.

39. The terminal device according to claim 37 or 38, wherein the HARQ RTT timer is the downlink HARQ RTT timer, the configuration information comprises a second time interval, the second time interval indicates an interval between the first moment and a third moment, the first moment is the moment at which the network device starts to transmit the first downlink data, and the third moment is a moment at which the terminal device starts to send acknowledgment ACK or negative acknowledgment NACK feedback information for the first downlink data; and
the determining unit is specifically configured to:
determine the time length of the downlink HARQ RTT timer based on the first time interval and/or the second time interval.

40. The terminal device according to claim 39, wherein the configuration information further comprises a third time interval, the third time interval indicates an interval between the third moment and the second moment, and the second moment is the moment at which the network device first starts to retransmit the first downlink data; and
the determining unit is specifically configured to:
determine the time length of the downlink HARQ RTT timer based on the third time interval.

41. The terminal device according to claim 37, wherein the HARQ RTT timer is an uplink HARQ RTT timer, the configuration information comprises a fourth time interval, the fourth time interval indicates an interval between a fourth moment and a fifth moment, the fourth moment is a moment at which the terminal device starts to transmit first uplink data, and the fifth moment is a moment at which the terminal device first starts to receive uplink retransmission scheduling information for the first uplink data; and
the determining unit is specifically configured to:
determine the fourth time interval as the time length of the uplink HARQ RTT timer.

42. The terminal device according to claim 37 or 41, wherein the HARQ RTT timer is the uplink HARQ RTT timer, the configuration information comprises a fifth time interval, the fifth time interval indicates an interval between the fourth moment and a sixth moment, the fourth moment is a moment at which the terminal device starts to receive uplink transmission scheduling information for the first uplink data, and the sixth moment is a moment at which the terminal device starts to transmit the first uplink data; and
the determining unit is specifically configured to:
determine the time length of the uplink HARQ RTT timer based on the fourth time interval and/or the fifth time interval.

43. The terminal device according to claim 37, 41, or 42, wherein the HARQ RTT timer is the uplink HARQ RTT timer, the configuration information comprises a sixth time interval, the sixth time interval indicates an interval between the sixth moment and the fifth moment, the sixth moment is the moment at which the terminal device starts to transmit the first uplink data, and the fifth moment is the moment at which the terminal device first starts to receive the uplink retransmission scheduling information for the first uplink data; and
the determining unit is specifically configured to:
determine the time length of the uplink HARQ RTT timer based on the sixth time interval.

44. The terminal device according to claim 43, wherein the configuration information comprises the fourth time interval, the fifth time interval, and the sixth time interval; and
the determining unit is further specifically configured to:
add the fifth time interval and the sixth time interval, to obtain a seventh time interval; and
determine, in the fourth time interval and the seventh time interval, a time interval that meets a first criterion as the time length of the HARQ RTT timer.

45. The terminal device according to claim 44, wherein the determining unit is further specifically configured to:
determine, in the fourth time interval and the seventh time interval, a shorter time interval as the time length of the downlink HARQ RTT timer, or a longer time interval as the time length of the downlink HARQ RTT timer.

46. The terminal device according to any one of claims 37 to 45, wherein the receiving unit is specifically configured to:
receive Radio Resource Control RRC information sent by the network device, wherein the RRC information comprises the configuration information; or
receive Media Access Control control element MAC CE information sent by the network device, wherein the MAC CE information comprises the configuration information; or
receive downlink control information DCI information sent by the network device, wherein the DCI information comprises the configuration information.

47. The terminal device according to any one of claims 37 to 46, wherein the time length of the HARQ RTT timer comprises at least one time unit.

48. The terminal device according to any one of claims 37 to 47, wherein the terminal device further comprises:
a sending unit, configured to send capability information of the terminal device to the terminal device before the receiving unit receives the configuration information sent by the network device.

49. A device, comprising a memory, a processor, and a program that is stored in the memory and that can run on the processor, wherein when executing the program, the processor implements the method according to any one of claims 1 to 26.

50. A computer-readable storage medium, storing an instruction, wherein when the instruction is executed, the method according to any one of claims 1 to 26 is performed.
